# EUROPEAN PATENT SPECIFICATION

(11) **EP 4 483 318 B1**
(45) Date of publication and mention of the grant of the patent: **12.11.2025**
(21) Application number: 23713813.6
(22) Date of filing: 27.02.2023
(51) Int. Cl.: G06Q 30/018, G06Q 40/04, G06Q 50/06, H04L 9/00, G06Q 20/02

(54) **MINTING AND TRANSACTING TOKENIZED DIFFERENTIATED ENERGY ATTRIBUTES USING BLOCKCHAIN**
MINZE UND TRANSAKTION VON TOKENISIERTEN DIFFERENZIERTEN ENERGIEATTRIBUTEN UNTER VERWENDUNG EINER BLOCKCHAIN
FORGEAGE ET TRANSACTION D'ATTRIBUTS D'ÉNERGIE DIFFÉRENCIÉE TOKÉNISÉS À L'AIDE DE CHAÎNE DE BLOCS

(30) Priority: 25.02.2022 US 202263313733 P
(43) Date of publication of application: 01.01.2025
(73) Proprietor: Earn Re, Inc., New York, New York 10004 (US)
(72) Inventor: LOHMANN, Aaron, New York, NY 10004 (US); VALDEZ, Christopher, Denver, CO 80202 (US); OSTERBUHR, Karl, New York, NY 10004 (US)
(74) Representative: Körfer, Thomas
(86) International application number: PCT/US2023/063323
(87) International publication number: WO 2023/164683

(56) References cited:
- US-A1- 2019 318 425
- US-A1- 2020 148 072
- US-A1- 2021 141 761

## Description

### RELATED APPLICATIONS

This Patent Application claims priority to U.S. Provisional Patent Application No. 63/313,733 entitled "QUANTIFYING AND MONETIZING RESPONSIBLY SOURCED GAS CERTIFICATION USING BLOCKCHAIN AS A VALUE ADD TO GAS TRANSACTIONS" and filed on February 25, 2022, and to U.S. Provisional Application No. 63/448,401, entitled "MINTING AND TRANSACTING TOKENIZED DIFFERENTIATED ENERGY ATTRIBUTES USING BLOCKCHAIN" filed on February 27, 2023, all of which are assigned to the assignee hereof.

### TECHNICAL FIELD

This disclosure relates to systems and methods for recording, tracking, and monetizing verified Differentiated Energy Attributes using blockchain as a value add to physical energy transactions.

### DESCRIPTION OF RELATED ART

Recent developments in environmental, social, and governance standards are focused on reducing emissions related to energy production. However, methods and systems that provide differentiated energy producers the ability to recuperate their Differentiated Energy Attributes ("DEA") related costs and investments via the sale and monetization of DEA tokens ("DEATs") are desirable.

US 2021/141761 A1 relates to creating and tracking digital energy assets using a blockchain.

### SUMMARY

This Summary is provided to introduce in a simplified form a selection of concepts that are further described below in the Detailed Description. This Summary is not intended to identify key features or essential features of the claimed subject matter, nor is it intended to limit the scope of the claimed subject matter.

In some implementations, an example method for digitizing differentiated energy attributes ("DEA") verification as differentiated energy attribute tokens ("DEATs") on a private blockchain network may include the steps of providing an application platform configured to run on a plurality of computer nodes participating in a network for minting, managing, transacting DEATs, and communicating with one or more of the private blockchain network, a differentiated energy producer's production accounting system or a verification entity, setting up one or more of a differentiated energy producer profile account, a producer private blockchain multi-signature wallet, a qualified buyer profile account, or a qualified buyer private blockchain multi-signature wallet, using the application platform, assigning a unique blockchain-based digital signature private key to each user of the qualified producer account and each user of the buyer profile account, inputting at a first predetermined interval differentiated energy production units and DEA verification data related to the producer's differentiated energy production at a production site, outputting a report of differentiated energy production units and DEA verification for the producer's and a verification entity's approval, and using a predetermined formula, minting one or more DEATs, to the producer's multi-signature wallet at a second predetermined interval. The minting and publishing steps may be governed by the terms and conditions of a smart contract published by the application platform and executed by the producer and the verification entity. The verification entity may collect the environmental attributes and the emissions data (DEA) related to the producer's differentiated energy production at a production site. The example method may further include the step of outputting a DEAT retirement report related to retiring one or more DEATs after differentiated energy corresponding to the one or more DEATs is consumed by an end user. One DEAT may correspond to one unit of differentiated energy produced or transported from the producer's production site that is subject to the DEA verification by the verification entity. One unit of differentiated energy may include one or more of 1 mcf, 1 MMBtu, 1 dekatherm, 1 gallon, 1 pipeline mile, 1 shipping mile, 1 metric ton, or 1 megawatt hour of differentiated energy corresponding to a particular differentiated energy production site.

In one aspect, the inputting step may be performed by one or more of the producer's production accounting system, the producer, the verification entity, or personnel related to a provider of the application platform. In one aspect, the predetermined formula may correlate the number of DEATs to be minted to the units of differentiated energy produced or transported from the producer's differentiated energy production site. In one aspect, the predetermined formula may include the minting of one DEAT for one unit of differentiated energy produced or transported from the producer's production site that is subject to the DEA verification by the verification entity. The first predetermined interval may include one or more of daily, weekly, monthly, quarterly, or semi-annually. That is, the inputting of differentiated energy production units and DEA verification data related to the producer's differentiated energy production at a production site may be scheduled once a day, once a week, once a month, once a quarter, or semi-annually. The second predetermined interval may be once a day. The minting step may include embedding unique data related to the DEA verification in each DEAT. The communicating step between the producer's production accounting system and the platform may include communicating using one or more of the platform's API or a preconfigured data upload protocol. In one aspect, the predetermined formula may include minting DEATs at a 1:1 correlation with a sold unit of differentiated energy produced from the differentiated energy production site.

In some implementations, the example method may further include the step of cryptographically recording to the blockchain one or more units of differentiated energy produced, DEA verification, or units of differentiated energy sold related to the production site. The example method may further include the step of automatically publishing the smart contract to the blockchain. The smart contract may include one or more of a contract related to recording units of differentiated energy produced, managing DEATs, or publishing DEATs to the producer's multi-signature wallet.

In some implementations, an example method for transacting DEATs published to the producer's multi-signature wallet, using one of the example methods previously described, may include publishing to the blockchain a bilateral transaction for DEATs between a buyer of DEATs and a seller of DEATs under a transaction smart contract and managed by the platform and automatically providing payment instructions to the buyer to transfer funds to the seller. The seller may include the producer of differentiated energy. The method buyer includes an entity or person pre-approved by the seller. The publishing step may include automatically publishing the transaction smart contract to the blockchain after the buyer and seller have executed the transaction smart contract via digital signatures enabled by the application platform. The buyer and seller may be qualified using one or more due diligence processes established by the application platform provider. The documents required for due diligence may be electronically completed and electronically submitted using the platform. The one or more due diligence processes may include bidirectionally communicating with at least one third party service provider database via an API of the platform.

In some implementations, an example system for digitizing DEA verifications as DEA tokens ("DEATs") on a private blockchain network may include a cloud-based application software/platform configured to mint, manage, and transact DEATs. The cloud-based platform may provide for communication with one or more of the private blockchain network, a differentiated energy producer's production accounting system via an API or a preconfigured data upload, or a verification entity. The example system may include a cloud object storage system, and a relational database service ("RDS"). The cloud-based platform may be configured to bidirectionally communicate with the cloud object storage system and the relational database service. The cloud-based platform may be configured to execute one or more of set-up of one or more of a differentiated energy producer profile account, a producer multi-signature wallet, a qualified buyer profile account, or a qualified buyer multi-signature wallet, assign a unique blockchain-based digital signature private key to each user of the producer account and each user of the qualified buyer profile account, input at a first predetermined interval differentiated energy production units and DEA verification data from the verification entity related to the producer's differentiated energy production at a production site, output a report of differentiate energy production units and DEA verification data for the approval of one or more of the producer or the verification entity, using a predetermined formula, mint (publish) one or more DEATs to the producer's multi-signature wallet at a second predetermined interval and governed by the terms and conditions of a smart contract between the producer and the verification entity. The platform may be configured to communicate with the verification entity via an API, wherein the verification entity collects the environmental attributes and the emissions data (DEA) related to the producer's differentiated energy production at a production site.

In one aspect, the predetermined formula may include the minting of one DEAT for one unit of differentiated energy produced or transported from the producer's production site that is subject to the DEA verification by the verification entity. The application software/platform may be configured to run on a plurality of blockchain nodes hosted on a cloud server. The blockchain nodes may be hosted locally and made available to only approved and contracted users of the platform. The cloud-based application platform may be developed as a microservice application deployed on Amazon Web Service. The cloud object storage system may include Amazon S3. The RDS may include Amazon RDS. The example system may be configured to provide authentication of the producer and DEAT buyer using one or more of OAuth protocol or JSON Web Tokens. Authentication may be provided by Passport.js library. Access to the producer profile account or the buyer profile account may be authenticated using two factor authentication ("2FA") by one or more of a time-based one-time password ("TOTP") and one-time password sent by SMS text messages ("SMS OTPs") to the producer's or buyer's smart device or managed by an authenticator app. An authenticator app may include the Google Authenticator app. The platform may be configured to transact DEATs via a bilateral transaction between the producer and the buyer governed by the terms and conditions of a smart transaction contract between the producer and the qualified buyer.

Details of one or more implementations of the subject matter described in this disclosure are set forth in the accompanying drawings and the description below. Other features, aspects, and advantages will become apparent from the description, the drawings, and the claims. Note that the relative dimensions of the following figures may not be drawn to scale.

### BRIEF DESCRIPTION OF THE DRAWINGS

The foregoing aspects and many of the attendant advantages of this disclosure will become more readily appreciated as the same becomes better understood by reference to the following detailed description, when taken in conjunction with the accompanying drawings, wherein:
FIG. **1** shows a schematic diagram of an example method for minting DEATs on a private blockchain managed by an example enterprise platform, according to some implementations.
FIG. **2** shows a schematic diagram of an example method for transacting DEATs via a bilateral transaction on a private blockchain managed by an example enterprise platform, according to some implementations.

All reference numerals, designators and callouts in the figures are hereby incorporated by this reference as if fully set forth herein. The failure to number an element in a figure is not intended to waive any rights. Unnumbered references may also be identified by alpha characters in the figures and appendices.

The following detailed description includes references to the accompanying drawings, which form a part of the detailed description. The drawings show, by way of illustration, specific embodiments in which the pilot assembly and methods may be practiced. These embodiments, which are to be understood as "examples" or "options," are described in enough detail to enable those skilled in the art to practice the present invention. The embodiments may be combined, other embodiments may be utilized, or structural or logical changes may be made without departing from the scope of the invention. The following detailed description is, therefore, not to be taken in a limiting sense and the scope of the invention is defined by the appended claims and their legal equivalents.

In this document, the terms "a" or "an" are used to include one or more than one, and the term "or" is used to refer to a nonexclusive "or" unless otherwise indicated. In addition, it is to be understood that the phraseology or terminology employed herein, and not otherwise defined, is for the purpose of description only and not of limitation. "DEA verification" means the verification issued by the agencies, that include, but are not limited to, Project Canary, MiQ, Validere, and Equitable Origin after examining energy production and transportation sites. Unless otherwise specified in this disclosure, for construing the scope of the term "about," the error bounds associated with the values disclosed is ± 10% of the values indicated in this disclosure. The error bounds associated with the values disclosed as percentages is ± 1% of the percentages indicated.

Like reference numbers and designations in the various drawings indicate like elements.

### DETAILED DESCRIPTION

The following description is directed to some example implementations for the purpose of describing the innovative aspects of this disclosure. However, a person having ordinary skill in the art will readily recognize that the teachings herein can be applied and modified in a multitude of different ways. The described implementations may be tailored to compensate for various performance related deficiencies. As such, the disclosed implementations are not to be limited by the examples provided herein, but rather encompass all implementations contemplated by the attached claims. Additionally, well-known elements of the disclosure will not be described in detail or will be omitted so as not to obscure the relevant details of the disclosure.

Various aspects of the disclosed systems and methods are described more fully herein with reference to the accompanying drawings. These aspects are provided so that this disclosure will be thorough and complete, and will fully convey the scope of the disclosure to those skilled in the art. Although some examples and aspects are described herein, many variations and permutations of these examples fall within the scope of the disclosure. Although some benefits and advantages of the various aspects are mentioned, the scope of the disclosure is not intended to be limited to benefits, uses, or objectives. The detailed description and drawings are merely illustrative of the disclosure rather than limiting, the scope of the disclosure being defined by the appended claims and equivalents thereof. The example decentralized system and methods utilize blockchain, allowing differentiated energy production and/or transportation verification ("DEA verification") to be digitized and traded in a safe, secure, and transparent manner. The example methods and systems may be used for digitizing verifications (verification data) related to all types of differentiated energy.

Driven by environmental stewardship and regulations, differentiated energy producers, transporters, shippers, and various industry participants are focused on increasing differentiated energy production while implementing low-emission operations and exploring production from renewable sources such as landfills. Differentiated Energy includes all type of energy sources, including, but not limited to, natural gas, hydrogen, and liquids that meet certain emission reduction ESG standards and are characterized by Differentiated Energy Attributes ("DEA") related to their production, transportation and use. DEA includes data derived from the production of energy produced by operations or sites that have been independently verified as meeting certain environmental, social, and governance ("ESG") standards including air emission reductions. Other factors considered are the producer's management practices regarding water management, community relations efforts, chemical management, and air quality management. Energy producers are adopting proactive and voluntary measures to meet emission regulations. Environmentally harmful greenhouse gas ("GHG") emissions, such as methane are the major constituent in energy production and varying quantities of harmful GHG emissions are typically released as waste gas at energy production sites. These harmful GHG emissions are considered as fugitive emissions because they are an unintended aspect of the production processes at well sites and transportation pathways. At some well sites, GHG emissions such as methane could be as high as 5% of the total daily production volume. This is significant because in the case of methane, GHG emissions are over 80 times more potent as carbon dioxide. The U.S. EPA has reported that methane accounts for 10% of all U.S. greenhouse gas emissions from human activities and attributed 30% of those emissions to natural gas and petroleum production sites. Recently, the U.S. EPA launched the Global Methane Initiative to reduce methane emissions. Subsequently, some natural gas producers have implemented processes to decrease fugitive methane emissions and to meet the standards established by verification agencies that include, but are not limited to, Project Canary, MiQ, Validere, Equitable Origin, and others.

Verification agencies have established their own standards for certifying the energy produced as "differentiated." For example, Project Canary created the "TrustWell^{™}" certification which requires continuous monitoring of 100s of parameters related to gas production including methane emissions, use of fracking fluids and wastewater disposal, by implementing specific monitoring technologies. Project Canary verifies differentiated energy with three performance ratings or tiers, namely, silver, gold and platinum. MiQ uses the "MiQ standard," which does not require continuous monitoring of parameters. Instead, assessment by an independent third party is required. MiQ issues certification with six grades or tiers A-F. Equitable Origin uses a "EO100^{™} for Responsible Energy Development," which does not require continuous monitoring, but requires independent assessment by a third party. Equitable Origin issues certification with three levels or tiers of performance targets PT1, PT2, PT3. Key parameters to any of the certification/verification methods are Methane Intensity ("MI") and Carbon Intensity ("CI"). MI may be defined as the volume of methane emissions at production sites expressed as a percentage of produced gas volumes. Most producers have stated goals for MI of less than about 0.05% before 2025. A producer's MI is a key parameter in determining overall DEA because methane is about 80 times more harmful as a greenhouse gas than CO₂. CI considers emissions from methane, carbon dioxide, and nitrous oxide presented as carbon dioxide equivalent ("CO2e"). When calculating CO2e, the most recent 20-year and 100-year global warming potentials from the Intergovernmental Panel on Climate Change ("IPCC") are typically used. Disclosing a CI value, in addition to MI, is vital for a complete picture of a company's emissions performance and complies with the GHG Protocol's ("GHGRP") Corporate Standard.

In addition to the above verification options, an energy producer may also consider meeting the requirements of ISO standard ISO 14001:2015, which relates to environmental management systems. The ISO standard does not require continuous monitoring but requires independent assessment by a third party. The ISO standard does not adopt performance rating tiers. DEA verification provides a declaration that a producer has passed certain standards with the expectation that differentiated energy buyers such as power plant operators and liquified natural gas ("LNG") buyers in the U.S. and worldwide will insist on this accreditation in the near future during routine energy transactions. Differentiated energy verification provides unique production data related to energy production and transportation and DEATs created as a result of the verification may be treated as tangible assets.

Unlike carbon credits, DEA verification that qualifies energy as responsibly sourced are issued by qualified third party agencies. As previously discussed, these third-party independent verifications are issued taking into account a multitude of factors that include, but are not limited to, MI, CI, production parameters such as drilling, fracturing, wellhead production, and processing. Other factors such as transportation and distribution practices, which may impact the environment and the supply chain network, may also be considered during verification. Most DEA verifications are updated frequently, which requires continuous data collection and monitoring and strict compliance to meet verification standards. Accordingly, unlike carbon credits or carbon offsets which are based on forecasts of GHH emissions, differentiated energy attributes do not permit the owner to emit a certain amount of carbon dioxide or other greenhouses gases. Instead, DEATs are a measure of actual emissions associated with energy production. DEA and DEATs may motivate energy producers to reduce actual emissions and recuperate their emission reduction/DEA related costs and investments via the sale and monetization of DEATs.

The cost of monitoring energy production for DEA verification is significant. Monitoring costs are however significantly lower than carbon abatement costs. The value of DEAs may be considered to be the difference of the carbon cost of non-DEA verified energy at the higher CI or MI, and DEA verified energy at lower CI or MI. The Oil and Gas Climate Initiative ("OGCI") has set a target to reduce the collective average MI of its aggregated upstream oil and gas operations to below 0.25% by 2025, with the goal to achieve 0.20%. Therefore, DEA sales would likely be associated with a price premium attached to it and producers are concerned that energy buyers such as electric utility companies may not wish to pay a premium. DEA price may approach up to 5% above market prices of non-DEA energy, or, in the case of natural gas, up to $0.15/mcf. It is well known that slight movements in gas pricing could impact the profitability of an energy producer.

Subsequently, methods and systems ("platforms") that enable gas producers to digitize their DEA verifications as tokens and to quantify, verify, manage and monetize tokens in compliance with GHGRP quality criteria on a blockchain are needed. DEATs may be viewed as a digital asset that may be traded on a private blockchain. DEATs are representative of DEA volumes or units of energy sold and provide an immutable record of production and transportation parameters on the blockchain and may be audited by an independent third-party. These methods and systems are needed to enable differentiated energy producers to monetize the DEA related costs and investments related to DEA verifications as a value-add to energy transactions, independent of energy sales. These methods and systems may also incentivize energy producers to phase out non-differentiated energy production with a complete transition to differentiated energy production in the near future. Legacy carbon offset solutions have generated distrust with respect to creation of carbon credits, trading and derived environmental benefits, and have fostered skepticism throughout the energy market, thereby severely limiting adoption and value creation from these solutions. The energy market views these carbon offset solutions as a threat since the goal of carbon offset solutions is likely to phase out fossil fuel (including natural gas) use.

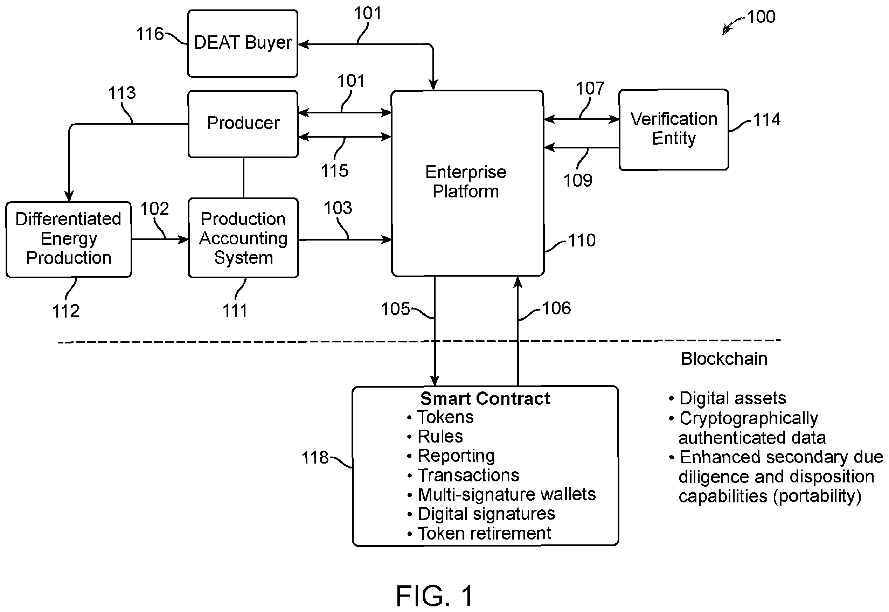

Disclosed are example methods and systems that utilize blockchain based smart contracts to provide differentiated energy producers the ability to recuperate their DEA related costs and investments via the sale and monetization of DEA tokens ("DEATs"). FIG. **1** shows a schematic diagram of an example method for minting DEATs on a private blockchain managed by the example enterprise platform **110,** according to some implementations. In example method **100** for creating DEATs, enterprise platform (software and system) **110** may be configured to be in communication with a differentiated energy producer's production accounting system **111.** Enterprise platform **110** and production accounting system **111** may be configured to communicate via a suitable application program interface (API) or preconfigured data upload protocol **103** to determine the units of differentiated energy produced. Enterprise platform **110** may also be configured to communicate bidirectionally via a suitable (API) in step **107** with a third party scientific-based verification entity **114** to collect the environmental attributes and the emissions data (DEA) related to the producer's **113** differentiated energy production **112** following a production batch submission in step **103.** Enterprise platform **110** may be configured to present the combined production data submitted in step **103** and its related environmental data in step **107** to both the producer **113** and verification entity **114** and subsequently collect digital blockchain-based signatures from the producer **113** and the verification entity **114** in steps **115** and **109,** respectively, before minting DEATs corresponding to differentiated energy production units, to the producer's **113** account; that is, to the producer's multi-signature wallet on the blockchain.

Platform **110** may be a cryptographically authenticated data repository ("CADR") for all data, records, activities, and reports related to differentiated energy production and associated DEA verification issued by verification entities **114.** As previously described, verification agencies or entities **114** may include, but are not limited to, Project Canary, MiQ, Validere, and Equitable Origin. As previously described, Project Canary's "TrustWell^{™}" certification requires continuous monitoring of 100s of parameters related to differentiated energy production including methane emissions, use of fracking fluids and wastewater disposal, by implementing specific monitoring technologies. DEAs associated with differentiated energy production site **112** (or transmission site in the case of pipelines) may be treated as a tangible asset which may be digitally tokenized via the blockchain. For example, one DEAT may be equivalent to one unit of differentiated energy produced. One unit of differentiated energy produced may be one or more of 1 mcf, 1 MMBtu, 1 dekatherm, 1 gallon, 1 pipeline mile, 1 shipping mile, 1 metric ton, or 1 megawatt hour of differentiated energy corresponding to a particular differentiated energy production site **112.** The process of transporting energy via pipeline, over the road, or on a seafaring cargo vessel can result in emissions not only attributable to the direct emissions of the transportation process, that is, pipeline, vehicle, or cargo vessel, but also attributable to the energy leaked into the atmosphere during the transportation journey. The exemplary systems and methods provide for a differentiated energy transporter to report the volume of energy transported and the total distance, in miles, of the transportation journey. The exemplary system also provides a means for a verification entity to scientifically verify the emissions data attributable to the transporter's journey, both direct emissions and the energy leaked while traveling.

In step **101,** personnel related to the enterprise platform provider **110,** the DEAT buyer **116** (approved users of a buyer account), or the differentiated energy producer **113** (approved users of a producer account) may create an account for differentiated energy producer **113** and DEAT buyer **116.** Approved users may then input required account set-up information on example platform **110** and provide required permissions for platform (software and system) **110** to communicate with producer's production accounting system **111** via a suitable API or preconfigured data upload in step **103.** In step **102,** producer's production accounting system **111** may capture the volume or units of differentiated energy produced at production site **112.** In step **103,** platform **110** may receive data representing physical volumes or units of differentiated energy produced for data processing from producer's production accounting system **111.** Producer **113** may submit production data reports in step **103** via a preconfigured data upload to system **110.** Production reports are provided to the producer **113** for approval. Platform **110** may be a cloud-based platform. In parallel to platform **110** receiving differentiated energy production data from the producer's production accounting system **111** in step **103,** the verification entity **114** may access the producer's production data on platform **110** to verify the environmental attributes related to differentiated energy in step **107.** Producer may also input other information such as API call details into platform **110.**

Example method **100** and platform **110** may be configured to cryptographically record production activity, DEA data and verifications, and production volumes or units of energy to the blockchain in step **105.** DEA tokens (DEATs) that are digitally minted may be transacted bilaterally on platform **110**'s private blockchain, and privately transferred bilaterally between known parties, and/or committed via spot and forward contract **118** in step **105.** Blockchain with its distributed ledger framework and peer-to-peer nature of transactions is decentralized and provides for enhanced system security at all nodes hosted on a cloud-server. In some implementations, blockchain nodes may be hosted locally and made available to only approved and contracted users of the platform. Blockchain prevents disruptions due to single point of hardware or database failure. Tokens issued and transacted using blockchain are more automated, provide greater portability, and introduce enhanced revenue opportunities to both differentiated energy producers and stakeholders that include energy buyers and traders. The example systems (including platforms) and methods disclosed herein utilize the capabilities of blockchain infrastructure to enable DEAT creation derived from differentiated energy production **112** combined with science-based verification of the related environmental attributes and emissions data by verification agency **114.** The example platform and systems decouple DEATs from the actual gas molecules sold into the market in compliance with GHGRP and therefore provide maximum flexibility for transacting DEAT data between a producer **113** and a buyer **116.** The digitization process creates an immutable record of the differentiated energy's related environmental attributes and emissions data on the blockchain.

Platform **110** may process data collected from producer's production accounting system **111** and data provided by the verification entity **114** in step **103** and generate one or more smart contracts **118** in step **105** for minting and trading DEATs based on produced and verified differentiated energy volumes or units of energy. Smart contracts may meet NAESB contract standards for the sale and purchase of energy attributes published by the North American Energy Standards Board. Pursuant to the terms and conditions of the smart contract **118** created by platform **110** and submitted to the producer **113** and verification entity **114** for approval in steps **115** and **109,** respectively, DEATs may be minted to the producer's multi-signature wallet (account) on the blockchain. DEA tokens ("DEATs") may be minted to the blockchain on the basis of produced and sold differentiated energy units from differentiated energy production **112.** As previously disclosed, 1 DEAT may be equivalent to 1 mcf, 1 MMBtu, 1 dekatherm, 1 gallon, 1 pipeline mile, 1 shipping mile, 1 metric ton, or 1 megawatt hour of differentiated energy from a particular differentiated energy production point **112.** Producer **113** and verification entity **114** may then approve the total number of tokens created by platform **110** by providing a digital blockchain-based signature in steps **115** and **109,** respectively prior to minting. Platform **110** may automatically publish **105** smart contracts **118** to a permissioned blockchain, which securely tracks and records all ongoing DEAT production activities, offerings, and DEAT transactions. The DEAT production activities, offerings, and DEAT transactions are made visible in step **106** to permissioned users of the exemplary platform **110.**

DEA verifications issued by agency or entity **114** to verify the differentiated energy attributes related to a differentiated energy production/transmission point **112** of producer **113** reside on the electronic ledger in the blockchain. Unique data related to the verified differentiated energy attributes provided by the verification entity **114** in step **107** is embedded in each DEAT related to that production/transmission point **112.** The example systems and methods eliminate the need to host DEA verification and differentiated energy production activity details with an outside registry and greatly simplify the token creation, management, and trading processes. Example platform **110,** along with the blockchain, serve as a registry and eliminate the complexity and inefficiencies of legacy environmental registry solutions. Example platform **110** serves as a cryptographically authenticated data repository ("CADR") for all documents, data, records, activities, and reports related to the DEAT creation and transfer via the blockchain. Example platform **110** may be configured to publish smart contracts **118** to a private version of Ethereum provided by Quorum. Example platform **110** may be configured to be blockchain agnostic and may publish smart contracts to most blockchains. Quorum is a permissioned implementation of Ethereum, which supports data privacy. Quorum, which was created and Open Sourced by JP Morgan, achieves this transaction-level data privacy by allowing data visibility on a need-to-know basis using a voting-based consensus algorithm. DEATs issued and transacted using the example systems and methods disclosed herein are automated, provide global exposure, and introduce enhanced transactability and liquidity to both producers **113** and buyers **116.** The CADR platform offers a robust API infrastructure allowing it to interface with third party databases or platforms enabling the CADR platform to act as a master platform. Additionally, the CADR platform provides for audit capabilities, and transactable data, and is available to provide accountants and financial professionals the ability to prepare any related tax filings and GHGRP reports.

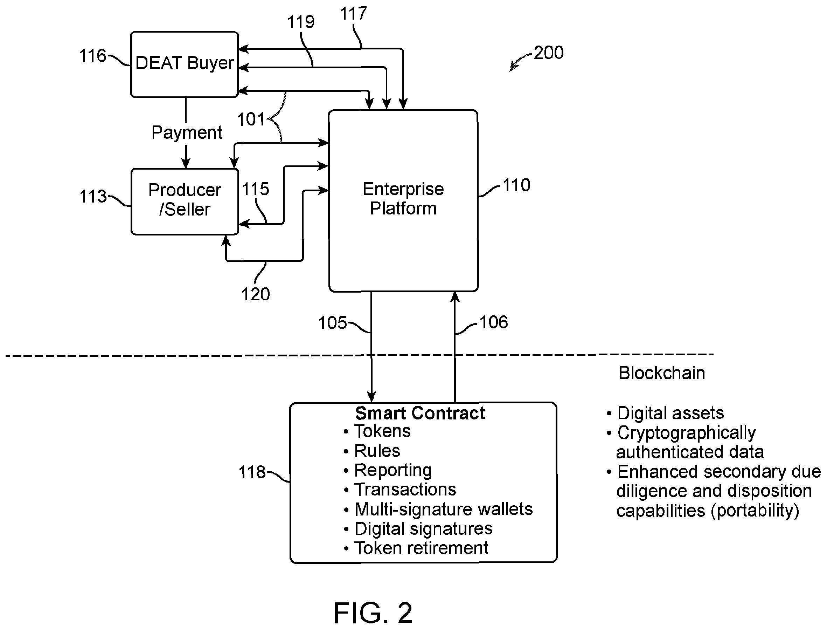

FIG. **2** shows a schematic diagram of an example method for transacting DEATs via a bilateral transaction on a private blockchain managed by an example enterprise platform, according to some implementations. In example method **200** for transacting DEATs, producer **113** may structure a bilateral transaction **120** for the sale of its DEATs to a buyer **116,** preselected by the producer **113,** via the example enterprise platform **110.** Prior to the creation of a transaction smart contract **118** representing the bilateral transaction, the producer/seller **113** may be required to digitally agree to and execute (sign) the transaction with a digital blockchain-based signature in step **115.** The enterprise platform **110,** subsequent to the creation or execution of the bilateral transaction **120,** may automatically create a transaction smart contract **118** in step **105** on the private blockchain containing the related transactional details, and present the transactional details to the buyer **116** via the enterprise platform **110** in step **106.** The buyer **116** may review the details of the bilateral transaction on the enterprise platform **110** and approve the transaction by digitally signing **117** the transactional smart contract **118** with the buyer's blockchain-based signature. In some implementations, the enterprise platform service provider may qualify buyers following a suitable due diligence process. Third party identity database providers such as Thompson Reuters Clear, and REFINITIV World may be used to verify and validate profiles on platform **110.** For due diligence purposes, platform **110** may provide for electronically completing required documentation, that include, but are not limited to, AML/KYC (anti-money laundering/know your customer) documents required to meet anti-money laundering regulations worldwide and other documents to enable DEAT sellers and buyers to conduct due diligence and to streamline diligence. In addition to a DEAT producer, a seller **113** may include any entity holding DEATs in its account on platform **110.** For example, a buyer **116** may re-sell the DEATs via a bilateral transaction on the platform **110** to a buyer **116.** Alternately, non-differentiated energy producers, that is, producers who do not practice emission mitigation schemes, may use the tokens during transaction of non-differentiated energy because associating DEATs to a non-differentiated energy transaction would help producers to sell non-differentiated energy to buyers of differentiated energy.

Examples of smart contracts **118** related to example method **100** or **200** may include, but are not limited to, contracts related to recording differentiated energy production volumes (or units of energy production), managing and issuing DEATs, managing DEAT trading terms and conditions (for example, bilateral transactions), audit compliance and reporting. Platform **110** may automatically publish smart contracts **118** to a permissioned blockchain which securely tracks and records all ongoing items and activities related to the creation, management, and transfer of DEATs. Smart contracts **118** are published to the blockchain and provide for automated servicing and distribution mechanisms for each instrument, while permanently recording all transactions. Smart contracts published to a permissioned blockchain by platform **110** offers all parties in the DEATs marketplace the ability to digitally interact with one another relating to a transaction. The disclosed example methods allow for inherent efficiencies because significant time is typically spent on due diligence activities related to financial, environmental, and legal review, predominantly due to the use of physical documents that are often stored in siloed places and have limited flexibility to be customized to suit various needs. Example platform **110** streamlines due diligence related to token transactions as prospective sellers and buyers of DEATs have visibility to all of the underlying information which is authenticated by the blockchain.

The value of a DEAT is generally determined by market conditions. Market participants (users of the example systems and methods described herein) may include global corporate end-users reporting GHG emissions according to the GHGRP Corporate Standard, middle marketers, brokers, traders, governmental entities, power generators, and sovereign nations. Most of these participants do not purchase differentiated energy directly from the producer who delivers differentiated energy along with its DEA. In general, a DEAT may be valued at market rates per energy unit and may offset the cost associated with receiving DEA verification as previously disclosed. In the case of a natural gas production or transmission point **112,** each DEAT may have unique serialized data embedded in it, for example, the identity of the well that produced gas, time, date, and location of the gas production. DEATs may be minted to meet the requirements of an "Ethereum Request for Comments" ("ERC") token technical standard to maintain functionality with wallets, exchanges, and smart contracts. For example, the standard employed may be Ethereum's ERC-1155 non-fungible token ("NFT") standard, which allows for the creation of dynamic NFTs. The example systems and methods to mint and trade DEATs are agnostic to the verification programs a producer may employ. Additionally, the example systems and methods may mint tokens of different value and tiers based on MI, CI, emissions, and environmental attribute values.

Currently, energy transactions are not conducted using blockchain. Tokenizing differentiated energy transactions may reduce complexity and bureaucracy and improve the speed and transparency of differentiated energy transactions that are quite complex. Exploiting synergies between the disclosed example methods and systems for generating and monetizing DEATs with tokenizing the sale of differentiated energy on a blockchain is within the scope of this invention.

DEATs related to a differentiated energy transaction may be retired in step **119** after differentiated energy is consumed by an end user thus fulfilling its useful life. That is, a token may mirror the useful life of the physical differentiated energy as it moves from production through consumption where it no longer exists. An owner of a DEAT is not obligated to retire the tokens with consumption of an equivalent energy unit of production, but it may be required to retire the DEAT if it intends to claim the DEA as its own. If it has been determined that too many tokens were purchased and are in an owner's multi-signature wallet, non-retired DEATs may be resold via bilateral transaction. A buyer **116** may retire acquired DEATs in step **119** via enterprise platform **110** in accordance with GHGRP standards for quality criteria, resulting in a GHGRP compliant retirement report, which may contain a complete view of the necessary GHG data including CI, MI, DEA, environmental attributes, and data provenance related to the buyer's specific energy consumption. When retired, the DEATs are "burned" from the blockchain preventing the related DEA from being transferred to any other entity. In order to motivate producers **113** to continuously improve and enhance their emission mitigation methods at production or transmission points **112,** DEATs must be retired for a buyer to claim the DEA represented by the DEATs as its own in accordance with GHGRP. To clarify, the GHGRP, along with most emissions and carbon reporting protocols, require that the DEA emissions data are permanently retired by the ultimate user of the corresponding volume of energy represented by the DEATs to prevent double representation and use of the underlying differentiated energy attributes ("DEA").

A buyer of non-differentiated energy may be able to treat their non-differentiated transactions as a differentiated energy-like transaction by associating the transacted volume or units of energy with an equivalent number of DEATs. Such a buyer may buy DEATs on the example platform **110.** DEATs traded on a bilateral transaction are characterized by verifiable provenance giving both sellers and buyers confidence in these transactions. The direct buyer-to-seller nature of the bilateral transaction provides for streamlined and transparent transactions and true price discovery for DEATs. Contractual obligations related to, Know-Your-Customer ("KYC"), identity management and transfer protocols may be managed on the blockchain using example platform **110.**

The disclosed example methods and systems streamline the creation, management, and trading of DEATs and incentivize differentiated energy producers to adopt engineering solutions that minimize emissions during energy production and transport. DEATs may be re-sold, transferred, or retired with confidence in their provenance. Data embedded in the DEATs provides insight into the DEA's lifecycle and is compliant with audit routines. A differentiated energy producer may select a suitable verification process and the example platform and systems embeds production data in DEATs minted to the blockchain. Production data are cryptographically recorded to a digital ledger and provide immutable and transparent proof of DEA's source. Since MI, CI, GHG emissions, and environmental attributes are the basis for verification, new verification standards beyond that that are currently available, may be issued using evolving standards and/or by other agencies. These new verifications may also be used as the basis for minting DEATs to the blockchain. DEATs minted and traded using the example systems and methods may serve as an agent of change and allows buyers a choice in purchasing energy that is characterized by a verifiable pedigree related to reduced GHG emissions.

Alternately, an owner may hold the extra DEATs and allocate them for its future energy consumption. This will allow DEAT owners to transact lookback token volumes or based on units of energy to fulfill historical ESG goals, a common practice in the energy and ESG markets. Lookback volumes represent any volume or units of differentiated energy that has been produced but not sold and may be relevant when producers have started qualifying energy as differentiated but have not tokenized and monetized their verifications because, for example, systems (and platforms) and methods as disclosed herein are not yet available. That is, DEA verified tokenization lags differentiated energy production and is therefore done at a time after the production of differentiated energy based on differentiated energy volumes or units that have not been sold.

Enterprise platform **110** may be developed as a microservice application deployed on Amazon Web Services ("AWS") EC2 and served by using AWS Elastic Load Balancer ("ELB"). For file storage, S3 may be used. Amazon S3 is cloud object storage with industry-leading scalability, data availability, security, and performance. For database, RDS may be used. Amazon Relational Database Service ("Amazon RDS") is a web service that makes it easier to set up, operate, and scale a relational database in the S3 cloud. Platform **110** may provide microservices, that include, but are not limited to, authentication, defining user profile and roles, providing virtual data room services, securing digital signatures related to a transaction, and creating and managing multi-signature wallets, and auditing as described below:

Authentication. The authentication microservice enables the client to create and use authentication sessions. Authentication may be implemented using the OAuth protocol and JSON Web Tokens ("JWT") session tokens. For backend authentication strategies, Passport.js library may be used. This process would enable the adding of new authentication providers easily into the system. Users are provided with a mandatory username and password, and depending on the registration method, a unique email address may also be attached. Security can be enhanced using two factor authentication ("2FA") by at least one of time-based one-time password ("TOTP") and one-time password sent by SMS text messages ("SMS OTPs") to a user's digital device such as a smartphone. 2FA may also be managed by an authenticator app. An authenticator app may include the Google Authenticator app, at the user's discretion.

User Profiles and Roles. After user accounts are created, users may have multiple roles attached to their profile. A role may be system-wide or attached to a single entity or issuance. System-wide roles are awarded when certain conditions are met (e.g., profile validation). Users may manage and submit their profile for verification.

Data room services. Data room and issuance represent the instruments that may be issued using platform **110.** An issuance may be created and have a data room attached to it. The parties to a transaction may go through a set of steps before the data room is locked. Once an issuance is completed, its data room is cryptographically signed and authenticated. The cryptographic signature is published on the internal blockchain.

Digital Signatures. Users may register wallets (hardware or browser based) which are under their control to serve as digital blockchain-based signatures in steps **109, 115,** and **117.** Digital signatures may be protected by a combination of public and private keys. Enterprise platform **110** may only have access to the public key. The private key may always be in the control of the user. Digital signature wallets may be configured to hold DEATs and simply provide a mechanism for collecting a user's digital blockchain-based signatures during a transaction. By using a smart contract **118,** the user may request a new digital signature if the user loses access to the previously registered digital blockchain-based signature (wallet).

Multi-signature Wallets. Users of enterprise platform **110** may establish a unique smart contract **118** representing the user's KYC/AML approved business entity to hold custody of the DEATs owned by that business entity. This unique smart contract may require two or more private keys to authorize a transaction using a multi-signature wallet. Multi-signature wallets are enabled by or enable a user's digital signature for minting, transfer, and acquisition of DEATs.

### EXAMPLE

Example retirement of DEATs.

Owners of DEATs may allocate tokens from their multi-signature wallet on the blockchain to users within their organization that consume energy. Owners may "match" consumption of energy that is not verified as differentiated with their DEATs and then mark the DEATs as retired. For example, Company A may plan to burn 300,000 MMBtu of natural gas that is not DEA verified in a certain month. Company A may input this gas consumption into its Company Profile of their dashboard on example platform **110** and select "Retire DEATs" and subsequently digitally sign a retirement request in step **119.** This action would "burn" 300,000 DEATs from Company A's multi-signature wallet in that month and generate a serialized GHGRP compliant retirement report in the name of Company A. The serialized GHGRP compliant retirement report will be viewable permanently on example platform **110** enabling Company A's stakeholders, regulators, and auditors to examine the detailed provenance associated with the 300,000 retired DEATs representing the 300,000 MMBtu's of differentiated natural gas.

In some implementations, the example methods **100** and **102** may be coupled with an auditable digital reconciliation process to ensure that the quantity of DEATs minted or created correlates directly to the volume or units of differentiated energy produced or sold. Producer **113** may be responsible for the reconciliation process. Reconciliation may be conducted within a reasonable time, for example, within about 30 days of minting tokens. To correct the number of tokens to be minted and allocated to producer **113** for a certain volumes of gas sales, platform **110** may allocate a percentage of the tokens minted in step **105** to an escrow-purposed smart contract to ensure the integrity of the volume of tokens available for sale.

In some implementations, DEATs may be traded as a Tier II commodity in the U.S. on a decentralized exchange ("DEX").

As used herein, a phrase referring to "at least one of" or "one or more of" a list of items refers to any combination of those items, including single members. For example, "at least one of: a, b, or c" is intended to cover the possibilities of: a only, b only, c only, a combination of a and b, a combination of a and c, a combination of b and c, and a combination of a and b and c. Unless otherwise specified in this disclosure, for construing the scope of the term "about" or "approximately," the error bounds associated with the values (dimensions, operating conditions etc.) disclosed is ± 10% of the values indicated in this disclosure. The error bounds associated with the values disclosed as percentages is ± 1% of the percentages indicated. The word "substantially" used before a specific word includes the meanings "considerable in extent to that which is specified," and "largely but not wholly that which is specified."

Various modifications to the implementations described in this disclosure may be readily apparent to persons having ordinary skill in the art, and the generic principles defined herein may be applied to other implementations. Thus, the claims are not intended to be limited to the implementations shown herein but are to be accorded the widest scope consistent with this disclosure, the principles and the novel features disclosed herein.

Additionally, various features that are described in this specification in the context of separate implementations also can be implemented in combination in a single implementation. Conversely, various features that are described in the context of a single implementation also can be implemented in multiple implementations separately or in any suitable subcombination. As such, although features may be described above in combination with one another, and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. Further, the drawings may schematically depict one more example processes in the form of a flowchart or flow diagram. However, other operations that are not depicted can be incorporated in the example processes that are schematically illustrated. For example, one or more additional operations can be performed before, after, simultaneously, or between any of the illustrated operations. In some circumstances, multitasking and parallel processing may be advantageous. Moreover, the separation of various system components in the implementations described above should not be understood as requiring such separation in all implementations, and it should be understood that the described program components and systems can generally be integrated together in a single product or packaged into multiple products.

### REFERENCES:

1. "Responsibly Sourced Gas: Cleaner, greener and here to stay," Wood Mackenzie publication, October 2021.

## Claims

1. A method for digitizing differentiated energy attributes (DEA) verification as differentiated energy attribute tokens (DEATs) on a private blockchain network independent of energy transactions, the method including:
providing an application platform configured to run on a plurality of computer nodes participating in a network for minting, managing, transacting DEATs, and communicating with one or more of the private blockchain network, a differentiated energy producer's production accounting system, or a third-party verification entity;
setting up one or more of a differentiated energy producer profile account, a producer private blockchain multi-signature wallet, a qualified DEATs buyer profile account, or a qualified DEATs buyer private blockchain multi-signature wallet, using the application platform;
assigning a unique blockchain-based digital signature private key to each user of the qualified producer account and each user of the DEATs buyer profile account;
inputting by one or more of the producer's production accounting system or the producer at a first predetermined interval, energy production units related to the producer's energy production at a production site;
verifying using the third-party verification entity whether the production site meets predetermined emission standards set by the third-party verification entity, and if emission standards are met, classifying the energy produced from the producer's production site as differentiated energy defined by differentiated energy attributes (DEA) associated with the emission standard;
outputting a report of differentiated energy production units and DEA verification for the producer's approval and the third-party verification entity's approval; and
using a predetermined formula, minting one or more DEATs to the producer's multi-signature wallet at a second predetermined interval, wherein the minting step is governed by the terms and conditions of a DEAT minting smart contract published by the application platform and executed by the producer and the third-party verification entity.

2. The method of claim 1, wherein the third-party verification entity collects the environmental attributes and the emissions data (DEA) related to the producer's differentiated energy production at a production site.

3. The method of claim 1, further including outputting a DEATs retirement report related to retiring one or more DEATs after differentiated energy corresponding to the one or more DEATs is consumed by an end user, wherein one DEATs corresponds to one unit of differentiated energy produced or transported from the producer's production site that is subject to the DEA verification by the third-party verification entity.

4. The method of claim 3, wherein the one unit of differentiated energy includes one or more of 1 mcf, 1 MMBtu, 1 dekatherm, 1 gallon, 1 pipeline mile, 1 shipping mile, 1 metric ton, or 1 megawatt hour of differentiated energy corresponding to a particular differentiated energy production site.

5. The method of claim 1, wherein the predetermined formula correlates the number of DEATs to be minted to the units of differentiated energy produced or transported from the producer's differentiated energy production site.

6. The method of claim 1, wherein the predetermined formula includes the minting of one DEAT for one unit of differentiated energy produced or transported from the producer's production site that is subject to the DEA verification by the third-party verification entity.

7. The method of claim 1, wherein minting includes embedding unique data related to the DEA verification in each DEAT.

8. The method of claim 1, wherein communicating between the producer's production accounting system and the platform includes communicating using one or more of the platform's API or a preconfigured data upload protocol.

9. The method of claim 1, further including cryptographically recording to the blockchain one or more units of differentiated energy produced, or third-party DEA verification data.

10. The method of claim 1, further including the step of automatically publishing the DEATs minting smart contract to the blockchain.

11. A method for transacting DEATs published to the producer's multi-signature wallet using the method of claim 1, the method including:
publishing to the blockchain a bilateral transaction for DEATs between a DEATs buyer and a DEATs seller under a DEAT transaction smart contract and managed by the platform; and
automatically providing payment instructions to the DEATs buyer to transfer funds to the DEATs seller.

12. The method of claim 11, wherein the DEATs seller includes the producer of differentiated energy.

13. The method of claim 11, wherein the DEATs buyer includes a DEATs buyer pre-approved by the seller.

14. The method of claim 11, wherein the publishing step includes automatically publishing the DEATs transaction smart contract to the blockchain after the DEATs buyer and DEATs seller have executed the DEATs transaction smart contract via digital signatures enabled by the application platform.

15. The method of claim 11, wherein the DEATs buyer and DEATs seller are qualified using one or more due diligence processes established by the application platform provider.

16. The method of claim 15, wherein the one or more due diligence processes include bidirectionally communicating with at least one third party service provider databases via an API of the platform.

17. A system for digitizing DEA verifications as DEA tokens (DEATs) on a private blockchain network independent of energy transactions, the system including:
a cloud-based application software/platform configured to mint, manage and transact DEATs, wherein the platform provides for communication with one or more of a the private blockchain network, a differentiated energy producer's production accounting system via an API or a preconfigured data upload, or a third-party verification entity;
a cloud object storage system; and,
a relational database service (RDS), wherein the platform is configured to bidirectionally communicate with the cloud object storage system and the relational database service, and wherein the platform is configured to execute one or more of:
set-up one or more of a differentiated energy producer profile account, a producer multi-signature wallet, a qualified DEATs buyer profile account, or a qualified DEATs buyer multi-signature wallet;
assign a unique blockchain-based digital signature private key to each user of the producer account and to each user of the qualified DEATs buyer profile account;
input by one or more of the producer's production accounting system or the producer at a first predetermined interval, differentiated energy production units related to the producer's differentiated energy production at a production site;
verify using the third-party verification entity, whether the production site meets predetermined emission standards set by the third-party verification entity, and if emission standards are met, label the energy produced from the producer's production site as differentiated energy defined by differentiated energy attributes (DEA) associated with the emission standard;
output a report of differentiate energy production units and DEA verification data for the approval of one or more of the producer or the third-party verification entity;
using a predetermined formula, and under the terms and conditions of a DEATs minting smart contract published by the application platform and executed by the producer and the third-party verification entity, mint one or more DEATs to the producer's multi-signature wallet at a second predetermined interval.

18. The system of claim 17, wherein the platform is configured to communicate with the third-party verification entity via an API, wherein the third-party verification entity collects the environmental attributes and the emissions data (DEA) related to the producer's differentiated energy production at a production site.

19. The system of claim 17, wherein the predetermined formula includes the minting of one DEAT for one unit of differentiated energy produced or transported from the producer's production site that is subject to the DEA verification by the third-party verification entity.

20. The system of claim 17, wherein access to the producer profile account or the DEATs buyer profile account is authenticated using two factor authentication (2FA) by one or more of time-based one-time password (TOTP) and one-time password sent by SMS text messages (SMS OTPs) to the producer's or DEATs buyer's smart device, or managed by an authenticator app.

21. The system of claim 17, wherein the platform is configured to transact DEATs via a bilateral transaction between the producer and the DEATs buyer governed by the terms and conditions of a DEATs smart transaction contract executed by the producer and the qualified DEATs buyer.

## Patentansprüche

1. Ein Verfahren zur Digitalisierung der Verifizierung von Attributen differenzierter Energie (DEA) als Attribut-Token differenzierter Energie (DEATs) in einem von Energietransaktionen unabhängigen privaten Blockchain-Netzwerk, wobei das Verfahren aufweist:
Bereitstellen einer Anwendungsplattform, die so konfiguriert ist, dass sie auf einer Mehrzahl an Computerknoten läuft, die an einem Netzwerk zum Prägen, Verwalten und Abwickeln von Transaktionen von DEATs beteiligt sind, und die mit einem oder mehreren der folgenden Elemente kommuniziert: dem privaten Blockchain-Netzwerk, einem Erzeugungsabrechnungssystem eines Erzeugers differenzierter Energie oder einer unabhängigen Verifizierungsstelle;
Einrichten eines oder mehrerer Profilkonten für Erzeuger differenzierter Energie, einer privaten Blockchain-Multi-Signatur-Wallet für Erzeuger, eines Profilkontos für qualifizierte DEATs-Käufer oder einer privaten Blockchain-Multi-Signatur-Wallet für qualifizierte DEATs-Käufer unter Verwendung der Anwendungsplattform;
Zuweisen eines eindeutigen Blockchain-basierten privaten Schlüssels für digitale Signaturen an jeden Nutzer des Kontos qualifizierter Erzeuger und jeden Nutzer des Profilkontos für DEATs-Käufer;
Eingeben, in einem ersten vorab festgelegten Intervall, von sich auf die Energieerzeugung des Erzeugers an einem Erzeugungsstandort beziehende Energieerzeugungseinheiten über ein oder mehrere der Erzeugerabrechnungssysteme des Erzeugers oder durch den Erzeuger selbst;
Überprüfen, durch die unabhängige Verifizierungsstelle, ob der Erzeugungsstandort die von der unabhängigen Verifizierungsstelle festgelegten Emissionsstandards erfüllt, und, bei Erfüllen der Emissionsstandards, Einstufen der von dem Erzeugungsstandort des Erzeugers erzeugten Energie als differenzierte Energie, die durch dem Emissionsstandard entsprechende Attribute differenzierter Energie (DEA) definiert ist,
Ausgeben eines Berichts über Erzeugungseinheiten differenzierter Energie und DEA-Verifizierung zur Genehmigung durch den Erzeuger und die unabhängige Verifizierungsstelle; und,
Verwenden einer vorab festgelegten Formel, unter Prägung eines oder mehrerer DEATs an die Multi-Signatur-Wallet des Erzeugers in einem zweiten vorab festgelegten Intervall, wobei der Schritt des Prägens den Klauseln und den Bedingungen eines von der Anwendungsplattform veröffentlichten und von dem Erzeuger und der unabhängigen Verifizierungsstelle ausgeführten DEAT-Ausgabe-Smart-Contracts unterliegt.

2. Das Verfahren nach Anspruch 1, wobei die unabhängige Verifizierungsstelle die ökologischen Attribute und die Emissionsdaten (DEA) im Zusammenhang mit der Erzeugung differenzierter Energie des Erzeugers an einem Erzeugungsstandort erfasst.

3. Das Verfahren nach Anspruch 1, ferner aufweisend das Ausgeben eines DEATs-Stilllegungsberichts, der sich auf die Stilllegung eines oder mehrerer DEATs bezieht, nachdem einem oder mehreren DEATs entsprechende differenzierte Energie von einem Endnutzer verbraucht wurde, wobei ein DEATs einer Einheit differenzierter Energie entspricht, die am Erzeugungsstandort des Erzeugers erzeugt oder transportiert wird und der DEA-Verifizierung durch die unabhängige Verifizierungsstelle unterliegt.

4. Das Verfahren nach Anspruch 3, wobei die eine Einheit differenzierter Energie eine oder mehrere der folgenden Einheiten umfasst: 1 mcf, 1 MMBtu, 1 Dekatherm, 1 Gallone, 1 Pipeline-Meile, 1 Schiffs-Meile, 1 metrische Tonne oder 1 Megawattstunde differenzierter Energie, die einem bestimmten Erzeugungsstandort differenzierter Energie entspricht.

5. Das Verfahren nach Anspruch 1, wobei die vorab festgelegte Formel die Anzahl der auszugebenden DEATs mit den am Erzeugungsstandort differenzierter Energie des Erzeugers erzeugten oder transportierten Einheiten differenzierter Energie korreliert.

6. Das Verfahren nach Anspruch 1, wobei die vorab festgelegte Formel das Ausgeben eines DEAT für eine Einheit differenzierter Energie umfasst, welche am Erzeugungsstandort des Erzeugers erzeugt oder transportiert wird und der DEA-Verifizierung durch die unabhängige Verifizierungsstelle unterliegt.

7. Das Verfahren nach Anspruch 1, wobei das Ausgeben das Einbetten im Zusammenhang mit der DEA-Verifizierung eindeutiger Daten in jeden DEAT umfasst.

8. Das Verfahren nach Anspruch 1, wobei das Kommunizieren zwischen dem Erzeugungsabrechnungssystem des Erzeugers und der Plattform das Kommunizieren unter Verwendung einer oder mehrerer APIs der Plattform oder eines vorkonfigurierten Daten-Upload-Protokolls umfasst.

9. Das Verfahren nach Anspruch 1, ferner aufweisend das kryptografische Aufzeichnen einer oder mehrerer Einheiten der erzeugten differenzierten Energie oder von DEA-Verifizierungsdaten Dritter in der Blockchain.

10. Das Verfahren nach Anspruch 1, ferner aufweisend den Schritt des automatischen Veröffentlichens des DEATs-Prägens-Smart-Contracts in der Blockchain.

11. Ein Verfahren zum Abwickeln von DEATs, die unter Verwendung des Verfahrens nach Anspruch 1 in der Multi-Signatur-Wallet des Erzeugers veröffentlicht wurden, wobei das Verfahren aufweist:
Veröffentlichen einer bilateralen Transaktion für DEATs zwischen einem DEATs-Käufer und einem DEATs-Verkäufer im Rahmen eines von der Plattform verwalteten DEAT-Transaktions-Smart-Contracts in der Blockchain; und
automatisches Bereitstellen von Zahlungsanweisungen an den DEATs-Käufer, um Gelder an den DEATs-Verkäufer zu überweisen.

12. Das Verfahren nach Anspruch 11, wobei der DEATs-Verkäufer den Erzeuger differenzierter Energie umfasst.

13. Das Verfahren nach Anspruch 11, wobei der DEATs-Käufer einen vom Verkäufer bereits bestätigten DEATs-Käufer umfasst.

14. Das Verfahren nach Anspruch 11, wobei der Schritt des Veröffentlichens das automatische Veröffentlichen des DEATs-Transaktions-Smart-Contracts in der Blockchain umfasst, nachdem der DEATs-Käufer und der DEATs-Verkäufer den DEATs-Transaktions-Smart-Contract mittels von der Anwendungsplattform ermöglichte digitale Signaturen ausgeführt haben.

15. Das Verfahren nach Anspruch 11, wobei der DEATs-Käufer und der DEATs-Verkäufer anhand eines oder mehrerer vom Anwendungsplattform-Anbieter festgelegter Due-Diligence-Prozesse qualifiziert werden.

16. Das Verfahren nach Anspruch 15, wobei der eine oder die mehreren Due-Diligence-Prozesse das über eine API der Plattform erfolgende bidirektionale Kommunizieren mit zumindest einer Datenbank eines Drittanbieters umfassen.

17. Ein System zum Digitalisieren von DEA-Verifizierungen als DEA-Token (DEATs) in einem privaten, von Energietransaktionen unabhängigen Blockchain-Netzwerk, wobei das System aufweist:
eine cloudbasierte Anwendungssoftware/Plattform, die zum Prägen, Verwalten und Abwickeln von Transaktionen von DEATs konfiguriert ist, wobei die Plattform die Kommunikation mit einem oder mehreren der folgenden Elemente ermöglicht: dem privaten Blockchain-Netzwerk, dem Erzeugungsabrechnungssystem eines Erzeugers differenzierter Energie über eine API oder einen vorkonfigurierten Daten-Upload oder einer unabhängigen Verifizierungsstelle;
ein Cloud-Objektspeichersystem; und
ein Dienst für eine relationale Datenbank (RDS), wobei die Plattform so konfiguriert ist, dass sie bidirektional mit dem Cloud-Objektspeichersystem und dem Dienst für eine relationale Datenbank kommuniziert, und wobei die Plattform so konfiguriert ist, dass sie eine oder mehrere der folgenden Funktionen ausführt:
Einrichten eines oder mehrerer Profilkonten für Erzeuger differenzierter Energie, einer Multi-Signatur-Wallet für Erzeuger, eines Profilkontos für qualifizierte DEATs-Käufer oder einer Multi-Signatur-Wallet für qualifizierte DEATs-Käufer;
Zuweisen eines eindeutigen Blockchain-basierten privaten Schlüssels für digitale Signaturen an jeden Benutzer des Erzeuger-Kontos und an jeden Benutzer des Profilkontos für qualifizierte DEATs-Käufer;
Eingeben, in einem ersten vorab festgelegten Intervall, differenzierter, sich auf die differenzierte Energieerzeugung des Erzeugers an einem Erzeugungsstandort beziehende Energieerzeugungseinheiten in eines oder mehrere der Erzeugungsabrechnungssysteme des Erzeugers oder durch den Erzeuger selbst;
Verifizieren, durch die unabhängige Verifizierungsstelle, ob der Erzeugungsstandort die von der unabhängigen Verifizierungsstelle festgelegten Emissionsstandards erfüllt, und, falls die Emissionsstandards erfüllt sind, Kennzeichnen der am Erzeugungsstandort des Erzeugers erzeugten Energie als differenzierte Energie, die durch dem Emissionsstandard entsprechende Attribute differenzierter Energie (DEA) definiert ist;
Erstellen eines Berichts über Erzeugungseinheiten differenzierter Energie und DEA-Verifizierungsdaten zur Genehmigung durch einen oder mehrere Erzeuger oder durch die unabhängige Verifizierungsstelle;
Benutzen einer vorab festgelegten Formel gemäß den Klauseln und den Bedingungen eines DEATs-Ausgabe-Smart-Contracts, der über die Anwendungsplattform veröffentlicht und vom Erzeuger und der unabhängigen Verifizierungsstelle ausgeführt wird, dabei Prägen eines oder mehrerer DEATs in die Multi-Signature-Wallet des Erzeugers in einem zweiten vorab festgelegten Intervall.

18. Das System nach Anspruch 17, wobei die Plattform so konfiguriert ist, dass sie mit der unabhängigen Verifizierungsstelle über eine API kommuniziert, wobei die unabhängige Verifizierungsstelle die der Erzeugung differenzierter Energie des Erzeugers an einem Erzeugungsstandort entsprechenden ökologischen Attribute und die Emissionsdaten (DEA) erfasst.

19. Das System nach Anspruch 17, wobei die vorab festgelegte Formel das Ausgeben eines DEAT für eine Einheit differenzierter Energie umfasst, welche am Erzeugungsstandort des Erzeugers erzeugt oder transportiert wird und der DEA-Verifizierung durch die unabhängige Verifizierungsstelle unterliegt.

20. Das System nach Anspruch 17, wobei der Zugriff auf das Profilkonto des Erzeugers oder das Profilkonto des DEATs-Käufer mittels Zwei-Faktor-Authentifizierung (2FA) authentifiziert wird, und zwar durch zeitbasiertes Einmalpasswort (TOTP) und/oder durch ein Einmalpasswort, welches per SMS-Textnachricht (SMS-OTP) an das Smart-Gerät des Erzeugers oder DEATs-Käufers gesendet oder durch eine Authentifizierungs-App verwaltet wird.

21. Das System nach Anspruch 17, wobei die Plattform so konfiguriert ist, dass sie DEATs über eine bilaterale Transaktion zwischen dem Erzeuger und dem DEATs-Käufer abwickelt, die den Bedingungen eines zwischen dem Erzeuger und dem qualifizierten DEATs-Käufer geschlossenen DEATs-Transaktions-Smart-Contract unterliegt.

## Revendications

1. Un procédé de numérisation d'une vérification d'attributs d'énergie différenciée (DEA) sous forme de jetons d'attributs d'énergie différenciée (DEAT) sur un réseau de chaînes de blocs privées indépendamment de transactions énergétiques, le procédé incluant de :
fournir une plate-forme d'application configurée pour fonctionner sur une pluralité de nœuds informatiques participant à un réseau pour forger, gérer, effectuer des transactions de DEAT et communiquer avec un ou plusieurs éléments parmi le réseau de chaînes de blocs privées, un système de comptabilité de production du producteur d'énergie différenciée ou une entité de vérification tierce ;
paramétrer un ou plusieurs éléments parmi un compte de profil de producteur d'énergie différenciée, un portefeuille à signatures multiples de chaîne de blocs privée de producteur, un compte de profil d'acheteur de DEAT qualifié ou un portefeuille à signatures multiples de chaînes de blocs privées d'acheteur de DEAT qualifié, en utilisant la plate-forme d'application ;
attribuer une clé privée unique de signature numérique à base de chaînes de blocs à chaque utilisateur du compte de producteur qualifié et à chaque utilisateur du compte de profil d'acheteur de DEAT ;
entrer, par un ou plusieurs éléments parmi le système de comptabilité de production du producteur ou le producteur à un premier intervalle prédéterminé, des unités de production d'énergie liées à la production d'énergie du producteur sur un site de production ;
vérifier, en utilisant l'entité de vérification tierce, si le site de production satisfait à des normes d'émission prédéterminées définies par l'entité de vérification tierce et, si les normes d'émission sont satisfaites, classer l'énergie produite à partir du site de production du producteur comme une énergie différenciée définie par des attributs d'énergie différenciée (DEA) associés à la norme d'émission ;
produire un rapport d'unités de production d'énergie différenciée et de vérification de DEA pour l'approbation du producteur et l'approbation de l'entité de vérification tierce ; et
utiliser une formule prédéterminée, forger un ou plusieurs DEAT dans le portefeuille à signatures multiples du producteur à un second intervalle prédéterminé, dans lequel l'étape de forgeage est régie par les modalités et les conditions d'un contrat intelligent de forgeage de DEAT publié par la plate-forme d'application et exécuté par le producteur et l'entité de vérification tierce.

2. Le procédé selon la revendication 1, dans lequel l'entité de vérification tierce collecte les attributs environnementaux et les données d'émission (DEA) liées à la production d'énergie différenciée du producteur sur un site de production.

3. Le procédé selon la revendication 1, incluant en outre de produire un rapport de retrait de DEAT lié au retrait d'un ou plusieurs DEAT après que l'énergie différenciée correspondant au ou aux DEAT a été consommée par un utilisateur final, dans lequel un DEAT correspond à une unité d'énergie différenciée produite ou transportée à partir du site de production du producteur qui est soumis à la vérification de DEA par l'entité de vérification tierce.

4. Le procédé selon la revendication 3, dans lequel l'unité d'énergie différenciée inclut un ou plusieurs éléments parmi 1 mcf, 1 MMBtu, 1 dekatherm, 1 gallon, 1 mille de pipeline, 1 mille de transport, 1 tonne métrique ou 1 mégawattheure d'énergie différenciée correspondant à un site particulier de production d'énergie différenciée.

5. Le procédé selon la revendication 1, dans lequel la formule prédéterminée corrèle le nombre de DEAT à forger aux unités d'énergie différenciée produite ou transportée à partir du site de production d'énergie différenciée du producteur.

6. Le procédé selon la revendication 1, dans lequel la formule prédéterminée inclut de forger un DEAT pour une unité d'énergie différenciée produite ou transportée à partir du site de production du producteur qui est soumis à la vérification de DEA par l'entité de vérification tierce.

7. Le procédé selon la revendication 1, dans lequel le forgeage inclut d'incorporer des données uniques liées à la vérification de DEA dans chaque DEAT.

8. Le procédé selon la revendication 1, dans lequel une communication entre le système de comptabilité de production du producteur et la plate-forme inclut de communiquer en utilisant un ou plusieurs éléments parmi l'API de la plate-forme ou un protocole de téléchargement de données préconfiguré.

9. Le procédé selon la revendication 1, incluant en outre d'enregistrer de manière cryptographique dans la chaîne de blocs une ou plusieurs unités d'énergie différenciée produite, ou des données de vérification de DEA tierce.

10. Le procédé selon la revendication 1, incluant en outre l'étape consistant à publier automatiquement le contrat intelligent de forgeage de DEAT sur la chaîne de blocs.

11. Un procédé pour effectuer des transactions de DEAT publiés sur le portefeuille à signatures multiples du producteur en utilisant le procédé de la revendication 1, le procédé incluant de :
publier sur la chaîne de blocs une transaction bilatérale pour des DEAT entre un acheteur de DEAT et un vendeur de DEAT dans le cadre d'un contrat intelligent de transaction de DEAT et géré par la plate-forme ; et
fournir automatiquement des instructions de paiement à l'acheteur de DEAT pour transférer des fonds au vendeur de DEAT.

12. Le procédé selon la revendication 11, dans lequel le vendeur de DEAT inclut le producteur d'énergie différenciée.

13. Le procédé selon la revendication 11, dans lequel l'acheteur de DEAT inclut un acheteur de DEAT pré-approuvé par le vendeur.

14. Le procédé selon la revendication 11, dans lequel l'étape de publication inclut de publier automatiquement le contrat intelligent de transaction de DEAT sur la chaîne de blocs après que l'acheteur de DEAT et le vendeur de DEAT ont exécuté le contrat intelligent de transaction de DEAT via des signatures numériques validées par la plate-forme d'application.

15. Le procédé selon la revendication 11, dans lequel l'acheteur de DEAT et le vendeur de DEAT sont qualifiés en utilisant un ou plusieurs processus de diligence raisonnable établis par le fournisseur de plate-forme d'application.

16. Le procédé selon la revendication 15, dans lequel le ou les processus de diligence raisonnable incluent de communiquer de façon bidirectionnelle avec au moins une base de données de fournisseur de service tiers via une API de la plate-forme.

17. Un système de numérisation de vérifications de DEA sous forme de jetons de DEA (DEAT) sur un réseau de chaînes de blocs privées indépendamment de transactions énergétiques, le système incluant :
un logiciel/une plate-forme d'application en nuage configuré pour forger, gérer et effectuer des transactions de DEAT, dans lequel la plate-forme permet une communication avec un ou plusieurs éléments parmi un réseau de chaînes de blocs privées, un système de comptabilité de production d'un producteur d'énergie différenciée via une API ou un téléchargement de données préconfiguré, ou une entité de vérification tierce ;
un système de stockage d'objets en nuage ; et
un service de base de données relationnelle (RDS), dans lequel la plate-forme est configurée pour communiquer de façon bidirectionnelle avec le système de stockage d'objets en nuage et le service de base de données relationnelle, et dans lequel la plate-forme est configurée pour exécuter une ou plusieurs actions parmi :
paramétrer un ou plusieurs éléments parmi un compte de profil de producteur d'énergie différenciée, un portefeuille à signatures multiples de producteur, un compte de profil d'acheteur de DEAT qualifié ou un portefeuille à signatures multiples d'acheteur de DEAT qualifié ;
attribuer une clé privée unique de signature numérique à base de chaînes de blocs à chaque utilisateur du compte de producteur et à chaque utilisateur du compte de profil d'acheteur de DEAT qualifié ;
entrer, par un ou plusieurs éléments parmi le système de comptabilité de production du producteur ou le producteur à un premier intervalle prédéterminé, des unités de production d'énergie différenciée liées à la production d'énergie différenciée du producteur sur un site de production ;
vérifier, en utilisant l'entité de vérification tierce, si le site de production satisfait à des normes d'émission prédéterminées définies par l'entité de vérification tierce et, si les normes d'émission sont satisfaites, étiqueter l'énergie produite à partir du site de production du producteur comme de l'énergie différenciée définie par des attributs d'énergie différenciée (DEA) associés à la norme d'émission ;
produire un rapport d'unités de production d'énergie différenciée et de données de vérification de DEA pour l'approbation d'un ou plusieurs éléments parmi le producteur ou l'entité de vérification tierce ;
utiliser une formule prédéterminée, et en vertu des modalités et des conditions d'un contrat intelligent de forgeage de DEAT publié par la plate-forme d'application et exécuté par le producteur et l'entité de vérification tierce, forger un ou plusieurs DEAT dans le portefeuille à signatures multiples du producteur à un second intervalle prédéterminé.

18. Le système selon la revendication 17, dans lequel la plate-forme est configurée pour communiquer avec l'entité de vérification tierce via une API, dans lequel l'entité de vérification tierce collecte les attributs environnementaux et les données d'émission (DEA) liées à la production d'énergie différenciée du producteur sur un site de production.

19. Le système selon la revendication 17, dans lequel la formule prédéterminée inclut de forger un DEAT pour une unité d'énergie différenciée produite ou transportée à partir du site de production du producteur qui est soumis à la vérification de DEA par l'entité de vérification tierce.

20. Le système selon la revendication 17, dans lequel un accès au compte de profil de producteur ou au compte de profil d'acheteur de DEAT est authentifié en utilisant une authentification à deux facteurs (2FA) par un ou plusieurs éléments parmi un mot de passe à usage unique basé sur le temps (TOTP) et un mot de passe à usage unique envoyé par des messages textuels SMS (SMS OTP) au dispositif intelligent du producteur ou de l'acheteur de DEAT, ou géré par une appli d'authentification.

21. Le système selon la revendication 17, dans lequel la plate-forme est configurée pour effectuer des transactions de DEAT via une transaction bilatérale entre le producteur et l'acheteur de DEAT régie par les modalités et les conditions d'un contrat de transaction intelligente de DEAT exécuté par le producteur et l'acheteur de DEAT qualifié.
